# EUROPEAN PATENT APPLICATION

(11) **EP 1 323 955 A1**
(43) Date of publication of application: **02.07.2003**
(21) Application number: 01830795.9
(22) Date of filing: 21.12.2001
(51) Int. Cl.: F16H 59/02, B62K 11/14

(54) **An ergonomic manual switch arrangement for motorcycles**

(71) Applicant: Ducati Motor Holding S.p.A., 40132 Bologna (IT)
(72) Inventor: Mengoli, Gianluigi, 40054 Maddalena di Budrio (Bologna) (IT)
(74) Representative: Lanzoni, Luciano

(57) **Abstract**

The ergonomic manual switch arrangement for motorcycles and the like comprises a left-hand section (1) and a right-hand section (2) mounted next to a respective handgrip (3a, 4a). Each section (1, 2) comprises a box (3, 4) to house electrical switch contacts, or data transmission means and mounts a set of pushbutton switches (9, 10 ,11, 12, 17, 18, 19, 20, 22, 23) with a triangular, elongated or round shape. The housing box (3, 4) is divided into an upper area (5, 6) and a lower area (7, 8) that is recessed with respect to the upper area. The ergonomic manual switch arrangement according to the invention further comprises rocker switches (22, 23) used to change the gears of the motorcycle. The pushbutton switches may be of the illuminated type and may comprise a multiplex wiring system through which information used to control the motorcycle is sent and received.

## Description

The present invention relates to an ergonomic manual switch arrangement for motorcycles and the like.

United States patent 4,455,463 discloses a switch arrangement for motorcycles comprising a pushbutton switch with an actuating rocker which is adjustable in several working positions in a plane perpendicular to the motorcycle handlebar, and single-action pushbutton switches located approximately in the same plane.

United States patent 3,891,965 discloses a time division multiplex system for the transmission of signals to the different parts of a motor vehicle. The system comprises a single cable arranged around the vehicle and including an electrical power conductor and a conductor for sending and receiving information.

United States patent 4,085,403 describes a multiplex control system for remote selective switching of electric loads typical of automotive vehicles through coding of cyclically recurring groups of pulses.

United States patent 3,894,442 describes a semi-automatic gear shifting device for motorcycles and the like. The device comprises two pushbutton switches mounted on the left handgrip of the handlebar of the motorcycle.

The present invention has for an object to provide a manual switch arrangement for motorcycles that is ergonomic and easy to operate.

In accordance with one aspect of it, the present invention discloses a manual switch arrangement for motorcycles as described in the independent claim below.

The dependent claims describe preferred, advantageous embodiments of the invention.

The preferred embodiments of the invention will now be described, without restricting the scope of the inventive concept, with reference to the accompanying drawings in which:
- Figure 1 is a perspective view of the left-hand section of the ergonomic manual switch arrangement according to the present invention;
- Figure 2 is a perspective view of the right-hand section of the ergonomic manual switch arrangement according to the present invention;
- Figure 3 is a side view of the left-hand section of the ergonomic manual switch arrangement according to the present invention;
- Figure 4 is a front view of the left-hand section of the ergonomic manual switch arrangement according to the present invention; and
- Figure 5 is a front view of the right-hand section of the ergonomic manual switch arrangement according to the present invention.

Although the description that follows refers to motorcycles, it is obvious that the present invention can be applied to all vehicles that have a handlebar to steer them such as, for example, scooters, snowmobiles and the like.

In the accompanying drawings, the numeral 1 denotes the left-hand section and 2 the right-hand section of the ergonomic manual switch arrangement according to the present invention. The two sections 1, 2 comprise boxes 3, 4 that house electrical switch contacts, or data transmission means, and that have an approximately symmetrical shape. The boxes 3, 4 are adjacent to the respective handgrips 3a, 4a, with axes 3b, 4b of customary type for steering a motorcycle or the like.

The boxes 3, 4 comprise an upper area each, labelled 5, 6 respectively, and a lower area each, labelled 7, 8 respectively. Each lower area 7, 8 has, at the front of it, a single action triangular pushbutton 9, 10 and, on the underside of it, a long pushbutton 11, 12, also of the single-action type. The triangular pushbuttons 9, 10 are used to switch on, respectively, the left and right turn indicators (not illustrated).

The long pushbuttons 11, 12, located on the undersides of the boxes, are used, respectively, to sound the horn - the one on the left - and to start the engine - the one on the right.

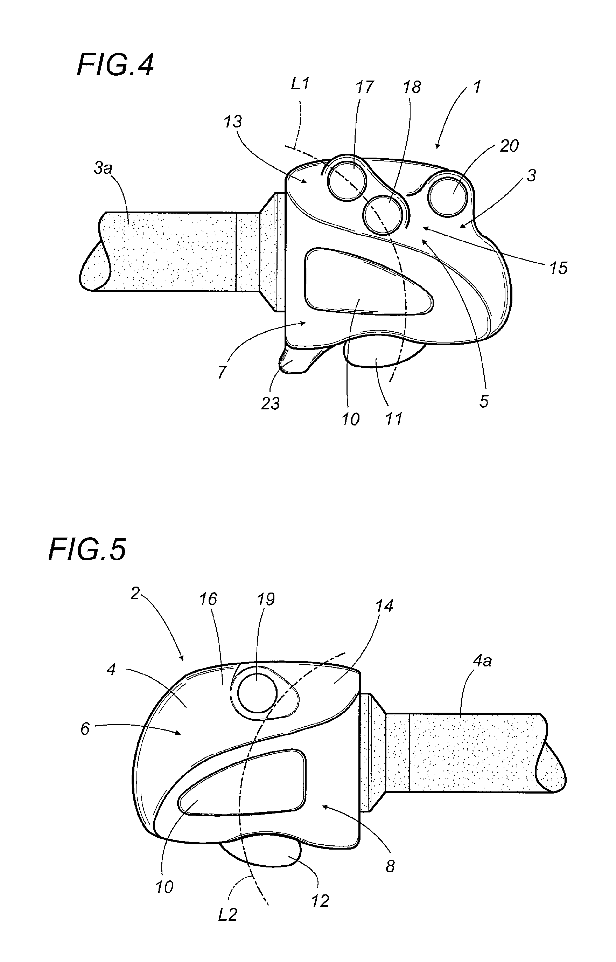

Each of the pushbuttons 9, 10, 11, 12 mounted on the lower areas 7, 8, is located on one of the arcs, indicated by the lines L1 and L2 in Figures 4 and 5, described by the fingers (index finger and thumb) on each of the rider's hands without releasing the grip on the handlebar. To further facilitate tactile recognition of the different areas by the rider, each of the lower areas 7, 8 is recessed with respect to the main body of the respective electric switch contact housing box 3, 4. Preferably, as shown in the drawings, the bottom areas 7, 8 have recesses that are triangular in shape to approximately match the shape of the rider's thumbs.

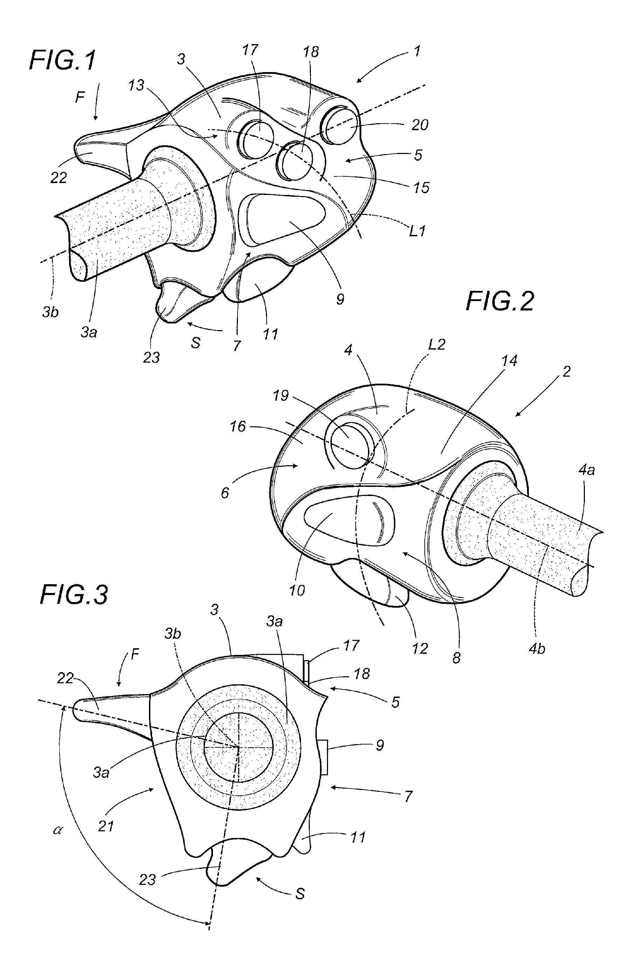

The upper areas 5, 6 are divided by the lines L1, L2, respectively, into a first left portion 13 and a first right portion 14, and a second left portion 15 and a second right portion 16 (Figures 3 and 4). Thus, the first portions 13, 14 are directly accessible by the rider without removing his/her hands from the handlebar, while the second portions 15, 16 can only be accessed by removing the hands from the handlebar.

In the first left portion 13 of the left-hand section 1 of the ergonomic switch arrangement, there are two pushbuttons 17, 18 used to switch on the high-beam and the low-beam lights, respectively. The pushbuttons 17, 18 are preferably round in shape to facilitate tactile recognition.

Preferably, and in compliance with current legislation, the pushbutton 18 must be pressed twice to switch on the low beam, and switches on only the rear or parking lights when it is pressed once, while the pushbutton 17 is disabled until the low beam is switched on.

When the lights are off and, hence, during daytime use, the pushbutton 17 may also be used to provide a visual warning to other road users which, according to current legislation, may be done by flashing the headlight, either high beam or low beam.

In the first right portion 14 of the right-hand section 2 of the ergonomic switch arrangement, there are no pushbuttons, whilst, in the second right portion 16, there is a pushbutton 19, preferably round, used to switch off the motorcycle engine in emergency situations.

In the second left portion 15, there is a pushbutton 20, preferably round in shape, for simultaneously switching on all four turn indicator lights, using them as hazard warning lights.

In other terms, both the left-hand section 1 and the right-hand section 2 of the ergonomic switch arrangement according to the present invention is divided into three areas and/or portions defining three different levels of switch importance and/or frequency of use.

The lower areas 7, 8 constitute a first level of switch importance and/or frequency of use. They include the turn indicator pushbuttons 9, 10, which are used frequently and are very important for road safety. On their undersides, they also include the horn button 11 and the motorcycle engine start button 12, which are both important for road safety although they are used less frequently.

The first portions 13 and 14 of the upper areas 5, 6, where the pushbuttons 17, 18 used to switch on the motorcycle lights are located, constitute a second level of switch importance and/or frequency of use. It should be noticed that the first right portion 14 does not have any pushbuttons on it but that this is only one particular embodiment of the invention where the emergency stop button 19 is assigned to a third level of switch importance and/or frequency of use.

In an alternative embodiment (which is not illustrated) the emergency engine stop pushbutton 19 might be mounted on the first right portion 14 so that it too could be easily pressed without removing the hand from the handlebar.

The second portions 15 and 16 of the upper areas 5, 6 constitute a third level of switch importance and/or frequency of use. These portions mount, respectively, on the left, a pushbutton 20 used to simultaneously switch on all four turn indicator lights, and, on the right, the emergency stop pushbutton 19. As mentioned above, the latter may also be located on the right portion 14.

Considered in their entirety, the shape of the boxes 3, 4, with their lower parts recessed, and the triangular, elongated and round shapes of the pushbuttons, make recognition of the different buttons and their functions easier and more intuitive.

As shown in more detail in Figures 1 and 3, the left-hand section 1 may include, at a position opposite the areas 5 and 7, that is to say, at the front of it in the motorcycle's direction of travel, another front area 21 that comprises a pair of rocker switches 22, 23 mounted at the top and bottom, respectively, and used to change the gears of the motorcycle.

The area 21 defines yet another level of switch importance and/or frequency of use which, however, cannot be considered according to the same order or importance as the other parts of the switch arrangement.

Indeed, the rocker switches 22, 23 are certainly important and used frequently for driving the motorcycle but they are not directly responsible, as the other switches are, for the road safety of the motorcycle. Given current control layouts, it is more natural for the area 21 to be located on the left where the clutch lever is also located. However, the area 21 with the rocker switches 22, 23 might also be located on the right, where the front brake lever is usually located.

The top rocker switch 22 is used for shifting from a higher gear to a lower gear. This operation is known in motorcycling jargon as downshifting.

The bottom rocker switch 23, on the other hand, is used for shifting from a lower gear to a higher gear.

The gear selector uses customary means for its operation, for example, electromagnetic or electric means with fluid-driven, that is to say, pneumatic or oil-hydraulic, actuators.

The arrangement of the rocker switches 22, 23 as described above is particularly favourable and intuitive for driving the motorcycle. Indeed, downshifting is normally used to slow the motorcycle down and, especially during sports riding, is often associated with use of the brake.

This creates a dynamic situation where the rider's weight bears down on the handgrips from above. It is therefore also easy and intuitive to operate the top rocker switch 22 by pushing it downwards with the fingers in the direction indicated by the arrow F, thus downshifting the gears.

The opposite situation arises when the motorcycle gears are shifted upwards. This situation usually occurs when the motorcycle is accelerating. Especially in the case of sports riding, this creates a dynamic situation where the pressure of the rider's hands tends to push the handgrips 3a, 4a from the bottom up. It is therefore easy and intuitive to operate the bottom rocker switch 23 by pushing it forwards with the thumb in the direction indicated by the arrow S, thus upshifting the gears.

For ease of operation, the rocker switches 22, 23 make an angle α of between 90 and 120 degrees, preferably 105 degrees, measured relative to the axis 3b of the left handgrip 3a (Figure 3).

To put the gears in neutral, that is to say, the position where no gear is engaged, a separate pushbutton (not illustrated) might be provided or one of the following solutions is possible:
(i) pressing both rocker switches 22, 23 simultaneously;
(ii) pressing both rocker switches 22, 23 simultaneously sideways;
(iii) pressing only one of the rocker switches 22, 23 sideways;
(iv) pressing the downshifting rocker switch 22 past the lowest gear position (usually first gear); in other words, the downshifting rocker switch 22 must be pressed several times until it reaches the neutral position.

In a first operating mode, the switches in the switch arrangement according to the present invention can be operated independently of the clutch. The clutch is operated manually using the customary lever (not illustrated) located on the left-hand side. The clutch must be operated in the customary manner to start and stop the motorcycle.

Once the motorcycle has started moving, on the other hand, the gears can be changed without using the clutch since gear selection is fast enough not to damage the gear wheels.

This type of operation is particularly advantageous for sports riding because it allows the same easy handling as a motorcycle with a manually operated clutch.

Thanks to the assisted gear selector, gear change time is significantly less than that of a traditional gear selector of purely mechanical type.

In another operating mode, the clutch is operated automatically when the gear is changed.

The clutch is operated by a suitable actuator of known type, similar to the one used to operate the gear selector. In other words, the clutch is operated by electromechanical or electric means with a fluid-driven actuator.

In this case, it is not necessary to engage the clutch when starting and stopping since the clutch is operated fully automatically. Once the motorcycle has started moving, the gear can be changed without engaging the clutch (as in the previous case) or the clutch may be engaged automatically on changing gear. In another embodiment, the gear selector also operates on the engine fuel supply, so it is not necessary to turn off the fuel when the gear is changed.

In yet another operating mode, the gears and the clutch are controlled fully automatically, for example by electronic storage means running a defined program. In this case, the rocker switches 22, 23 can be used to select the mode of automatic operation, for example: touring, sport, economy, etc.

It should also be noticed that all the gear selection modes can be combined in a single motorcycle, enabling the rider to choose from manual, semi-automatic or fully automatic operation.

To improve the visibility of the switches, for example when riding at night, all the switches can be of the back-lit type, that is to say, having at least one part that emits light. Back lighting may be accomplished using any customary devices, such as, for example, incandescent lamps mounted inside the switch, or LEDs, or fibre optics in combination with a light source of one of these kinds.

The switch arrangement according to the present invention can be wired using traditional metal conductor wiring, for example, of copper alloy, for each function performed by each switch.

In a preferred embodiment, the wiring of the ergonomic switch arrangement consists of a single cable including an electrical conductor for sending and receiving information to and from the switches, a power conductor, and a plurality of logical addresses, as described in United States patents 3,891,965, 4,085,403 and 4,459,591, the disclosure of which is incorporated herein by reference.

This type of wiring makes it possible to reduce the number of wires required between the switches and the parts (receivers) of the motorcycle. The selection of the receivers is accomplished through a sequence of pulses that characterises each receiver and that is formed in such a way as not to be influenced by external noise caused, for example, by magnetic fields near which the motorcycle passes.

To reduce the effects of external noise, the cable used to send and receive information may be made of optic fibres.

The properties of this type of wiring are particularly advantageous for motorcycles which do not usually have an outer metal body to act as a screen and which are therefore more easily affected by external noise.

The invention achieves important advantages.

Thanks to the special design of the switch contact housing boxes, with their lower parts recessed, and the different shapes (triangular, elongated and round) of the pushbutton switches, controlling the motorcycle is easy and intuitive and handling is safe.

Another advantage of the present invention is the back-lit pushbutton switches which make the ergonomic manual switch arrangement visible even in the dark, for example, when riding on unlit roads at night.

Another advantage of the invention is that the switch arrangement uses a multiplex control system which simplifies the wiring and makes transmission of information safe and reliable, especially if fibre-optic cables are used.

Yet another advantage of the invention is that the ergonomic manual switch arrangement includes the manual gear change switches and controls, thus increasing ease of use and speed of gear selection.

### Key

1 left-hand section of the switch arrangement
2 right-hand section of the switch arrangement
3 left box that houses the electrical switch contacts
3a left handgrip
3b, 4b axis of left/right handgrip
4 right box that houses the electrical switch contacts
4a right handgrip
5 upper left-hand area
6 upper right-hand area
7 lower left-hand area
8 lower right-hand area
9 left turn indicator pushbutton
10 right turn indicator pushbutton
11 horn pushbutton
12 engine electric start pushbutton
13, 14 first portions of upper areas 5 ,6
15, 16 second portions of upper areas 5 ,6
17, 18 headlight and headlight flasher pushbuttons
19 emergency engine stop pushbutton
20 pushbutton for switching on the four turn indicator lights simultaneously
21 front area
22, 23 rocker type gear change switches
L1, L2 lines indicating the arc described by the rider's fingers to operate the switches

## Claims

1. An ergonomic manual switch arrangement for motorcycles and the like, comprising a left-hand section (1) and a right-hand section (2) mounted next to a respective handgrip (3a, 4a), each section (1, 2) comprising:
a box (3, 4) to house electrical switch contacts, or data transmission means;
at least one pushbutton (9, 10 ,11, 12, 17, 18, 19, 20, 22, 23) for controlling a specific function and mounted on the box (3, 4);
the switch arrangement being **characterised in that** the housing box (3, 4) is divided into an upper area (5, 6) and a lower area (7, 8) that is recessed with respect to the upper area.

2. The switch arrangement according to claim 1, **characterised in that** the lower area (7, 8) comprises triangular pushbuttons (9, 10) used to switch on the turn indicator lights of the motorcycle.

3. The switch arrangement according to claim 1 or 2, **characterised in that** the lower area (7, 8) comprises long pushbuttons (11, 12) used, respectively, to sound the horn - the one on the left - and to start the engine-the one on the right.

4. The switch arrangement according to any of the foregoing claims, **characterised in that** the upper area (5, 6) comprises a first portion (13, 14), that is directly accessible by the rider without removing his/her hands from the handgrips (3a, 4a) and that mounts round pushbuttons (17, 18) used to switch on the motorcycle lights.

5. The switch arrangement according to any of the foregoing claims, **characterised in that** the upper area (5, 6) comprises a second portion (15, 16), that is not directly accessible without removing the hands from the handgrips (3a, 4a), the portion (15) on the left hand side mounting a round pushbutton (20) used to switch on all the turn indicator lights simultaneously.

6. The switch arrangement according to claim 5, **characterised in that** the second portion (15, 16) comprises a right-hand portion (16) equipped with a round pushbutton (19) used to switch off the motorcycle engine in emergency situations.

7. The switch arrangement according to any of the foregoing claims, **characterised in that** the housing box (3, 4) comprises a front area (21), opposite the upper and lower areas (5, 6, 7, 8), equipped with rocker switches (22, 23) used to change the gears of the motorcycle.

8. The switch arrangement according to claim 7, **characterised in that** the area (21) and the rocker switches (22, 23) are in the left-hand section (1) of the switch arrangement.

9. The switch arrangement according to claim 7 or 8, **characterised in that** the rocker switches (22, 23) make an angle α of between 90 and 120 degrees, measured relative to the axis (3b, 4b) of the handgrip (3a, 4a).

10. The switch arrangement according to claim 9, **characterised in that** the angle α, measured relative to the axis (3a, 4b) of the handgrip (3a, 4a) is 105 degrees.

11. The switch arrangement according to any of the foregoing claims, **characterised in that** the switches (9, 10 ,11, 12, 17, 18, 19, 20, 22, 23) are of the back-lit type, that is to say, with at least one part that emits light.

12. The switch arrangement according to any of the foregoing claims, **characterised in that** its wiring consists of a single cable including an electrical conductor for sending and receiving information to and from the switches and a power conductor, and **in that** the selection of the receivers is accomplished through a sequence of pulses that characterises each receiver.

13. The switch arrangement according to claim 12, **characterised in that** conductor for sending and receiving information is made from optical fibre.
